# EUROPÄISCHE PATENTSCHRIFT

(11) **EP 0 502 881 B1**
(45) Veröffentlichungstag und Bekanntmachung des Hinweises auf die Patenterteilung: **24.08.1994**
(21) Anmeldenummer: 90917090.4
(22) Anmeldetag: 22.11.1990
(51) Int. Cl.: G11B 15/43, G11B 15/665

(54) **VERFAHREN ZUR EINSTELLUNG DER BANDSPANNUNG**
PROCESS FOR ADJUSTING THE TENSION IN A TAPE
PROCEDE DE REGLAGE DE LA TENSION D'UNE BANDE

(30) Priorität: 30.11.1989 DE 3939521
(43) Veröffentlichungstag der Anmeldung: 16.09.1992
(73) Patentinhaber: Deutsche Thomson-Brandt GmbH, 78003 Villingen-Schwenningen (DE)
(72) Erfinder: SCHANDL, Hartmut, A-1100 Wien (AT); WEISSER, Fritz, D-7742 St. Georgen (DE)
(86) Internationale Anmeldenummer: EP9001995
(87) Internationale Veröffentlichungsnummer: WO9108569

(56) Entgegenhaltungen:
- EP-A- 0 252 330
- EP-A- 0 263 444
- EP-A- 2 404 437
- WO-A-90/12397
- FR-A- 1 067 954
- GB-A- 2 094 542
- US-A- 4 510 534
- US-A- 4 801 853
- PATENT ABSTRACTS OF JAPAN, vol. 6, no. 162 (P-137)(1040), 25 August 1982

## Beschreibung

Video- und Audiorecorder speichern die Information vorzugsweise auf Magnetband, welches in einer Kassette auf zwei nebeneinander liegenden Wickelkörpern untergebracht ist. Die Kassette ist dabei so angelegt, daß die Wickelkörper kraftschlüssig in entsprechende Dorne der Antriebsmechanismen des Abspielgerätes einrasten. Bei handelsüblichen Videorecordern mit einer rotierenden Kopftrommel ist es erforderlich, das Magnetband durch eine Fädelmechnik aus der Kassette herauszuziehen und mit Hilfe von Führungen an den Umfang der Kopftrommel anzulegen. Dieser Fädelvorgang wird durch einen Fädelmotor bewirkt, der das Magnetband z.B. mittels über Kurvenscheibe angetriebener Fädelwagen in seine Spielposition bringt.

Durch einen weiteren Motor, der auch als Capstanmotor ausgebildet sein kann, werden die Wickelteller angetrieben, wobei dieser Antrieb z.B. über ein Schwenkrad erfolgt, das jeweils an den ziehenden Wickelteller angekoppelt wird, während am Abwickelteller im Wiedergabebetrieb eine als Bremsband ausgebildete Reibungsbremse die geforderte Bandspannung aufrecht erhält. Für eine gleichmäßige Bandspannung über die gesamte Bandlänge wird durch einen Bandzugfühler die jeweilige Bandspannung abgetastet und je nach Stellung des Fühlers in eine angepaßte Bremswirkung durch das vom Bremszugfühler gesteuerte Bremsband umgesetzt.

Für den Betrieb Suchlauf rückwärts muß dagegen des Bremsband gelöst werden, da es sich in dieser Betriebsart bei bekannten Konstruktionen durch den geänderten Wickelsinn am Aufwikkelteller festziehen würde. Das Lösen des Bremsbandes geschieht allgemein durch Abheben des Bandzugfühlhebels vom Magnetband. Damit wird allerdings der zuletzt eingestellte Bandzug aufgehoben und es entsteht eine Bandschlaufe, die bei Anlauf des Magnetbandes aufgesogen werden muß. Somit ist es bei einer derartigen Lösung nicht ohne weiteres möglich, eine Einzelbildschaltung bei Umsteuern des Magnetbandes vom Vorwärts- in den Suchlaufrückwärtsbetrieb zu erreichen.

Aus der nicht vorveröffentlichten Patentanmeldung DE 39 35 150 ist ein Magnetbandrecorder bekannt, bei dem der Antrieb der Wickelkörper über ein Schwenkrad erfolgt, welches von einem Planetengetriebe mit integrierter, in ihrer Wirkung einstellbarer Rutschkupplung, angetrieben wird. Bei diesem Recorder werden feste Werte für die Rutschkupplung in den verschiedenen Betriebsarten eingestellt.

Da im Suchlaufrückwärtsbetrieb, wie bereits aufgezeigt, die mechanische Bandbremse ohne Wirkung ist und ein fest vorgegebener Wert für die Bandspannung für guten Band-Kopfkontakt von der Rutschkupplung aufgebracht werden muß, ergibt sich, über die Bandlänge gesehen, bei sich verändernden Bandwickeldurchmessern eine Bandspannungerhöhung bis zum 4-fachen Wert, wodurch erhöhte Verschleißerscheinungen insbesondere am Magnetband selbst durch Überdehnung in bestimmten Bandabschnitten auftreten kann.

Es ist Aufgabe der Erfindung, ein Verfahren für ein Magnetbandgerät aufzuzeigen, bei dem einerseits bei Drehrichtungsumkehr für den Suchlauf-Rückwärtsbetrieb die zuletzt eingestellten Werte für Bandposition und Bandspannung erhalten bleiben und andererseits in dieser Betriebsart eine angepaßte Regelung des Bandzuges für gleichmäßige Bandspannung in jeder Stellung des Magnetbandes erreicht wird.

Diese Aufgabe wird gemäß der Erfindung durch die im Anspruch 1 aufgeführten Merkmale gelöst. Vorteilhafte Weiterbildungen der Erfindung sind in den Unteransprüchen gekennzeichnet.

Ein Verfahren gemäß dem Oberbegriff des Anspruchs1 ist aus EP-A-0 263 444 bekannt.

Im Prinzip werden bei einer Umsteuerung in den Suchlauf-Rückwärtsbetrieb die zuletzt eingestellten Werte für Bandposition und Bandspannung dadurch aufrechterhalten, daß der Bandzugfühlhebel zunächst in seiner zuletzt eingenommenen Position arretiert wird. Dieses geschieht durch einen, z.B. vom Fädelmotor freigegebenen Sperrhebel, der einen ortsfesten Drehpunkt aufweist und mit einem Hebelarm durch Federwirkung auf den Bandzugfühlhebel aufgesetzt wird. Der Sperrhebel greift auf eine besonders ausgeformte Fläche des Bandzugfühlhebels ein, wodurch der Bandzugfühlhebel und die mit dem Bandzugfühlhebel gekoppelte Bandbremse am Abwickelteller zunächst in ihrer Position festgehalten werden.

Im Suchlauf-Rückwärtsbetrieb ist für guten Band-Kopf-Kontakt gegenüber dem normalen Wiedergabebetrieb wegen des größeren Bandweges zwischen antreibender Capstanwelle und dem angetriebenen Wickelteller ein größeres Übertragungsmoment erforderlich, was zur Folge hat, daß auch die Bandspannung in dieser Betriebsart höher ist. Eingestellt wird das Übertragungsmoment durch eine im Antriebsweg angeordnete Rutschkopplung, die z.B. in einem Getriebe angeordnet sein kann, wie in der erwähnten Anmeldung DE 39 35 150 beschrieben. Durch die erhöhte Bandspannung bei anlaufendem Suchlauf-Rückwärtsbetrieb wird der mit dem Magnetband in Kontakt stehende Bandzugfühlhebel in die Richtung ausgelenkt, in welcher das Bremsband vom Abwickelteller - der jetzt als Aufwickelteller arbeitet - gelöst wird. Die Auslenkung des Bandzugfühlhebels in die beschriebene Richtung ist trotz anliegendem Sperrhebel möglich, da die Fläche, auf welcher der Sperrhebel angreift, so geformt ist, daß bei straff angezogenem Magnetband der Sperrhebel auf dieser Fläche gleiten kann und schließlich eine Stellung erreicht, in welcher der Sperrhebel nicht mehr mit dem Bandzugfühlhebel in Kontakt steht. Dabei liegt der Bandzugfühlhebel weiterhin am Magnetband an und folgt den Auslenkungen des Magnetbandes.

Um auch in dieser Betriebsart eine, über die Bandlänge gesehen, gleichmäßige Bandspannung zu erreichen, können diese Auslenkungen dazu genutzt werden, eine Nachsteuerung der Kupplungswirkung zu erreichen. Die jeweilige Stellung des Bandzugfühlhebels wird durch Sensoren, z.B. in Form einer Lichtschranke, in welche ein besonders ausgebildetes Teil des Bandzugfühlhebels eintaucht, detektiert. Von den Sensoren werden Steuersignale abgegeben, die in einer elektronischen Schaltung ausgewertet und zur Nachstellung der Kupplungswirkung an einen elektromechanischen Wandler ausgegeben werden, der die Verstellung der Kupplung bewirkt. Dabei kann der elektromechanische Wandler der Fädelmotor sein, der über eine Hebelanordnung mit der einstellbaren Kupplung verbunden ist. Als Sensoren können mechanische, magnetische (Hallelemente) oder optische Elemente eingesetzt werde. Besonders vorteilhaft ist die Verwendung bereits im Gerät vorhandener Sensoren. So können z.B. die Sensoren Verwendung finden, welche für die Betriebsart-Detektion des Laufwerkes vorgesehen sind die in der Betriebsart Suchlauf-Rückwärts bisher ohne Funktion gewesen sind.

Eine weitere Möglichkeit, die Kupplungwirkung für eine möglichst gleichmäße Bandspannung einzustellen besteht darin, in bekannter Weise die jeweiligen Wickeldurchmesser von Aufwickel- und Abwickelspule zu bestimmen und aus dem Verhältnis der Durchmesser zueinander Steuerspannungen für den elektromechanischen Wandler zu generieren. Dieses kann z. B. mit Hilfe eines Mikroprozessors geschehen, der ohnehin in heutigen Magnetbandrecordern vorhanden ist. Diese Art der Kupplungsnachstellung ist allerdings lediglich als Steuervorgang anzusehen, wogegen die beschriebene Kupplungsnachstellung über Sensoren, die die Stellung des Bandzugfühlhebels detektieren einen Regelvorgang in Form einer geschlossenen Regelschleife darstellt.

Im folgenden soll die Erfindung anhand einer Figur beispielhaft näher beschrieben werden:
- Fig. 1: zeigt in einer Draufsicht ein Laufwerkchassis für einen Videorecorder
- Fig. 2: zeigt ein Blockschaltbild für die Kupplungsverstellung mittels eines elektromagnetischen Wandlers.
- Fig. 3: zeigt die Einstellung der Kupplungswirkung in Abhängigkeit der Bandwickeldurchmesser.

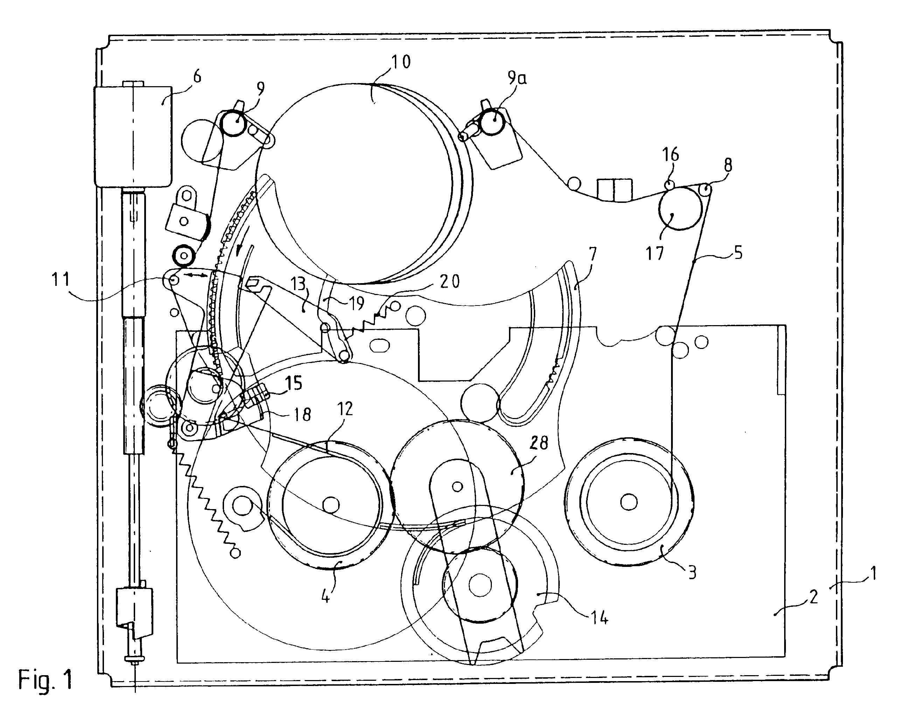

Fig. 1 zeigt in einer Draufsicht ein Laufwerkchassis 1 für einen Videorecorder mit einer eingelegten Magnetbandkassette 2. Das Magnetband 5 ist durch den Fädelmotor 6 über Fädelelemente 8, 9, 9a mittels nicht dargestellter Führungen aus der Kassette 2 herausgezogen und um eine Kopftrommel 10 gelegt. Der Capstanmotor ist außerhalb von Kassette 2 angeordnet. Seine Welle 16 treibt einerseits das Magnetband 5 in Verbindung mit einer Gummiandruckrolle (GA-Rolle) 17 an und andererseits über einen nicht dargestellten Gummiriemen das Getriebe 14 an, welches in der Darstellung über Schwenkrad 18 mit dem Abwickelteller 4 in Eingriff steht. Da in der Darstellung durch die GA-Rolle 17 das Magnetband 5 angetrieben wird, ist somit die Betriebsart "Suchlauf-Rückwärts" vorgegeben. Der Bandzugfühlhebel 11 liegt auch in dieser Betriebsart am Magnetband 5 an, wobei allerdings das vom Bandzugfühlhebel 11 steuerbare Bremsband 12 vom Abwickelteller 4, der in dieser Betriebsart den Aufwickelteller darstellt, abgehoben ist, d.h. nicht in Eingriff steht. Der Sperrhebel 13 ist bereits in Bezug auf die Stellung von Bandzugfühlhebel 11 nicht mehr in Funktion, da der Bandzugfühlhebel 11 durch die in dieser Betriebsart eingestellte Bandspannung weit in Pfeilrichtung gesehen nach rechts ausgelenkt ist.

In dieser Stellung taucht ein mit dem Bandzugfühlhebel verbundenes Teil 18 in einen Sensor 15, hier als Lichtschranke ausgebildet, ein. Von dem Senor 15 wird die jeweilige Stellung von Bandzufühlhebel 11 detektiert und in Signale umgesetzt, die zur Steuerung der Wirkung einer Rutschkupplung dienen, die in dem Getriebe 14 integriert ist und für die Einstellung der Bandspannung in dieser Betriebsart dient. Eingestellt wird die Kupplung über nicht dargestellte Hebel von Fädelmotor 6, dem die Steuersignale über eine Auswerteschaltung zugeführt werden. Eine Anordnung der steuerbaren Kupplung in einem Planetengetriebe sowie das Umsteuern des Schwenkrades 28 ist, wie bereits erwähnt, in der nicht vorveröffentlichten DE-Anmeldung 39 35 150 näher beschrieben.

In der Betriebsart Wiedergabe oder Aufnahme ist das Schwenkrad 28 über die von Fädelmotor 6 in Pfeilrichtung drehbare Kurvenscheibe 7 an den Aufwickelteller 3 gelegt und der Sperrhebel 13 durch Führung in einer Nut 19 von Kurvenscheibe 7 soweit angehoben, daß der Sperrhebel 13 mit dem Bandzugfühlhebel 11 nicht in Kontakt kommen kann. Da in dieser Betriebsart eine relativ geringe Bandspannung auftritt, ist der Bandzugfühlhebel 11 in Pfeilrichtung gesehen weiter nach links ausgelenkt.

Bei Umsteuern aus dem Wiedergabebetrieb in den Suchlauf-Rückwärtsbetrieb wird durch eine Drehung von Kurvenscheibe 7 in die dargestellte Endstellung das Schwenkrad 28 an den Wickelteller 4 gelegt und der Sperrhebel 13 über Nut 19 soweit freigegeben, daß die Feder 20 den Sperrhebel auf die als Schräge ausgebildete Fläche von Bandzugfühlhebel 11 preßt. Dadurch wird während des Umsteuervorganges die zuletzt eingenommene Stellung vom Bandzugfühlhebel 11 festgehalten. Auch die Bandbremse 12 behält somit die eingestellte Wirkung bei. Erst bei Anlaufen des Capstanmotors und damit bei Antrieb von Wickelteller 4 wird die Bandspannung erhöht, wodurch Bandzugfühlhebel 11 in Pfeilrichtung nach rechts ausgelenkt wird. Durch diesen Vorgang wird Sperrhebel 13, bedingt durch die besondere Ausformung der Auflagefläche von Bandzugfühlhebel 11 außer Funktion gebracht und die Bandbremse 12 von Wikkelteller 4 abgehoben. Die weitere Steuerung der Bandspannung wird dann von der Kupplung in Getriebe 14 übernommen.

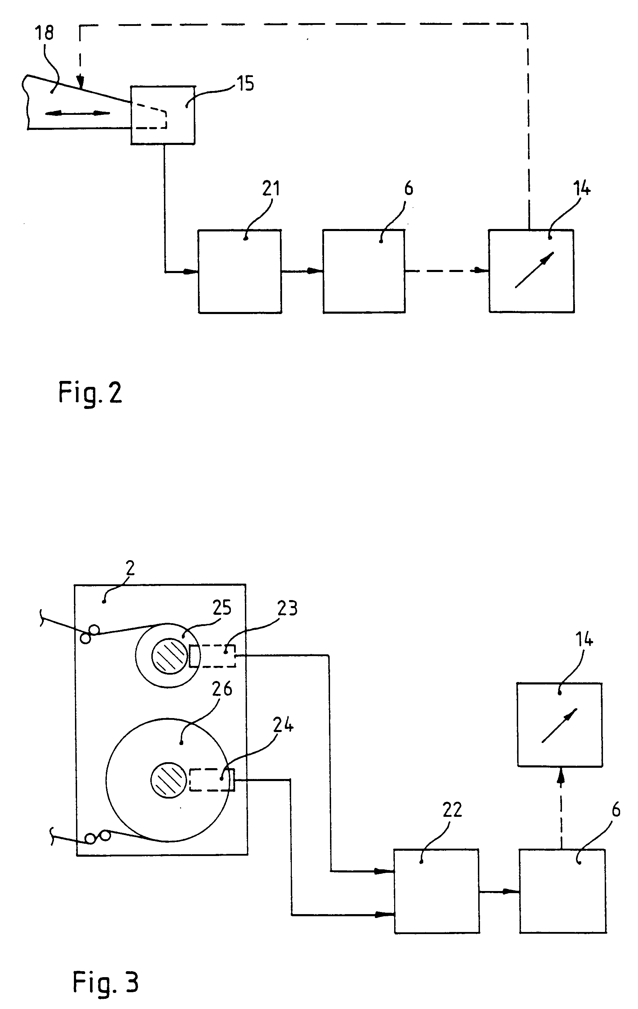

Fig. 2 zeigt ein Blockschaltbild für die Kupplungsverstellung mittels eines elektromechanischen Wandlers 6.

In einen Sensor 15 taucht in der Betriebsart Suchlauf Rückwärts ein speziell ausgeformtes Teil 18 von Bandzugfühlhebel 11 ein, welches z.B. aus einer lichtdurchlässigen strichmarkierten Folie bestehen kann, wenn der Sensor 15 als Licht- schranke ausgebildet ist. Im Fall eines Sensors 15, ausgebildet als Hallelement, würde eine besondere Form, wie in der Fig. beispielhaft dargestellt genügen, um eine mechanische Position von Teil 18 relativ zu einem Festpunkt, ausgedrückt durch den Pfeil in der Darstellung, erkennen zu können. Von dem Sensor 15 werden Stellungssignale generiert, die in einer Auswerteschaltung 21 in Steuersignale umgesetzt werden. Diese dienen zur Nachsteuerung eines elektromechanischen Wandlers 6. Wandler 6 ist in diesem Beispiel der bereits im Gerät vorhandene Fädelmotor 6, welcher über eine Hebelanordnung mit der einstellbaren Rutschkupplung im Getriebe 14 verbunden ist und je nach Vorgabe von Sensor 15 die Bandspannung durch Verstellung der Rutschkupplungswirkung einstellt. Durch die gestrichelte Linie zwischen Getriebe (Kupplung 14) und dem Teil 18 von Bandzugfühlhebel 11 soll die Regelung der Bandspannung mittels Verstellung der Rutschkupplung aufgezeigt werden. Diese Art der Regelung stellt eine geschlossene Regelschleife dar, durch die feinfühlig die Bandspannung über die gesamte Länge eines Magnetbandes auf etwa konstanten Wert gehalten werden kann.

Fig. 3 zeigt die Einstellung der Kupplungswirkung in Abhängigkeit der Bandwickeldurchmesser.

Die Umdrehungsgeschwindigkeiten der in Kassette 2 eingestellten Bandwickeldurchmesser 25,26 werden in bereits bekannter Weise mittels Sensoren 23 und 24 detektiert. Diese geben Signale an einen Mikroprozessor 22 ab, welcher aus den Umdrehungsgeschwindigkeiten die eingestellten Bandwickeldurchmesser errechnet und aus dem Verhältnis der Durchmesser zueinander eine Steuerspannung generiert, die dem elektronischen Wandler 6 zwecks Einstellung der Kupplungswirkung der steuerbaren Kupplung im Getriebe 14 zugeführt wird.

## Patentansprüche

1. Verfahren zur Einstellung der Bandspannung in einem Magnetbandgerät, bei dem ein Magnetband (5) zwischen einer Abwickelspule und einer Aufwickelspule transportiert wird und durch von einem Fädelmotor (6) über eine Kurvenscheibe angetriebene Fädelelemente (8,9,9a) aus einer Kassette herausgezogen und um eine rotierende Kopftrommel (10) gelegt ist, wobei der Bandzug im Normalbetrieb vorwärts von einem Bandzugfühlhebel (11) abgetastet wird, mit dem ein auf den Abwickelteller einwirkendes Bremsband (12) verbunden ist, und das Gerät ferner eine auf den jeweils angetriebenen Wickelteller (3,4) wirkende Rutschkupplung aufweist, durch die in den verschiedenen Betriebsarten eine Voreinstellung des Bandzuges erfolgt, **dadurch gekennzeichnet,** daß bei Umsteuern für den Betrieb Suchlauf rückwärts der Bandzugfühlhebel (11) in seiner zuletzt eingenommenen Position über einen steuerbaren Sperrhebel (13) arretiert wird, derart, daß durch die Bandspannungserhöhung im anlaufenden Ruckwärtsbetrieb die Arretierung aufgehoben und der Bandzugfühlhebel (11) in eine Position gezogen wird, in welcher das Bremsband (12) gelöst wird und die weitere Steuerung des Bandzuges durch die Wirkung der Rutschkupplung erfolgt.

2. Verfahren nach Anspruch 1, **dadurch gekennzeichnet,** daß die auf den jeweils angetriebenen Wickelteller (3,4) wirkende Rutschkupplung in einem Getriebe (14) integriert ist, wobei die Wirkung der Rutschkupplung mittels eines elektromechanischen Wandlers (6) einstellbar ist.

3. Verfahren nach Anspruch 2, **dadurch gekennzeichnet,** daß die Wirkung der Rutschkupplung durch Signale an den elektromechanischen Wandler (6) steuerbar ist, die von einer Sensorschaltung (15) abgegeben werden, welche die Position des Bandzugfühlhebels (11) detektiert und aus dessen jeweiliger Position in einer Auswerteschaltung (21) die Steuersignale zur Nachstellung des elektromechanischen Wandlers (6) generiert.

4. Verfahren nach Anspruch 2, **dadurch gekennzeichnet,** daß die Wirkung der Rutschkupplung durch Signale an den elektromechanischen Wandler (6) steuerbar ist, die von einem Mikroprozessor (22) abgegeben werden, von dem die Durchmesser der Bandwickel (25,26) errechnet, und von dem aus dem Verhältnis der beiden Bandwickeldurchmesser zueinander, Steuersignale zur Nachstellung des elektromechanischen Wandlers (6) generiert werden.

5. Verfahren nach einem der Ansprüche 2 - 4, **dadurch gekennzeichnet,** der elektromechanische Wandler (6) der Fädelmotor (6) ist, der über eine Steuerhebelanordnung mit der Kupplung verbunden ist.

6. Verfahren nach Anspruch 1, **dadurch gekennzeichnet,** daß der Hebel (13) zur Arretierung des Bandzugfühlhebels (11) durch den Fädelmotor (6) über die Kurvenscheibe (7) gesteuert wird.

7. Verfahren nach Anspruch 1, **dadurch gekennzeichnet,** daß zwischen Hebel (13) und Bandzugfühlhebel (11) ein elastisches Dämpfungsglied wirksam ist, durch welches Regelschwingungen des Bandzugfühlhebels (11) gedämpft werden.

8. Verfahren nach Anspruch 3, **dadurch gekennzeichnet,** daß als Sensor (15) eine Lichtschranke verwendet wird, die auch zur Betriebsart-Detektion des Laufwerkes dient und weder im normalen Wiedergabebetrieb noch im Rücklauf-Suchlaufbetrieb aktiviert ist.

## Claims

1. Method of adjusting the tape tension in a magnetic tape appliance, in which a magnetic tape (5) is transported between a wind-off disc and a take-up disc and is drawn out of a cassette by pull-through elements (8, 9, 9a), which are driven by a pull-through motor (6) via a cam disc, and is placed around a rotating head drum (10), the tape tension in normal forward mode being detected by a tape tension sensing lever (11), to which a brake band (12) acting upon the wind-off disc is connected, and the appliance further has a slipping clutch, which acts upon the driven winding disc (3, 4) and by means of which a presetting of the tape tension is effected in the various modes, **characterized in that,** upon a switchover into search backward mode, the tape tension sensing lever (11) is arrested in its last assumed position by means of a controllable locking lever (13) in such a manner that as a result of the tape tension increase at the start of backward mode the arresting action is cancelled and the tape tension lever (11) is pulled into a position, in which the brake band (12) is released and further control of the tape tension is effected by the action of the slipping clutch.

2. Method according to claim 1, **characterized in that** the slipping clutch acting upon the driven winding disc (3, 4) is integrated in a gearing (14), the action of the slipping clutch being adjustable by means of an electromechanical transducer (6).

3. Method according to claim 2, **characterized in that** the action of the slipping clutch is controllable by signals to the electromechanical transducer (6), said signals being produced by a sensor circuit (15), which detects the position of the tape tension sensing lever (11) and from the position of said lever at any one time generates in an evaluation circuit (21) the control signals for resetting the electromechanical transducer (6).

4. Method according to claim 2, **characterized in that** the action of the slipping clutch is controllable by signals to the electromechanical transducer (6), said signals being produced by a microprocessor (22), which calculates the diameters of the tape windings (25, 26) and from the ratio of the two tape-winding diameters one to the other generates control signals for resetting the electromechanical transducer (6).

5. Method according to one of claims 2 to 4, **characterized in that** the electromechanical transducer (6) is the pull-through motor (6), which is connected by a control lever arrangement to the clutch.

6. Method according to claim 1, **characterized in that** the lever (13) for arresting the tape tension sensing lever (11) is controlled by the pull-through motor (6) via the cam disc (7).

7. Method according to claim 1, **characterized in that** an elastic damping member, by means of which control oscillations of the tape tension sensing lever (11) are damped, is effective between the lever (13) and the tape tension sensing lever (11).

8. Method according to claim 3, **characterized in that,** as a sensor (15), a light barrier is used, which also serves to detect the mode of the drive and is activated neither in normal playback mode nor in search backward mode.

## Revendications

1. Processus pour le réglage de la tension de la bande dans un appareil à bande magnétique dans lequel une bande magnétique (5) est transportée entre une bobine de déroulement et une bobine d'enroulement, est retirée d'une cassette par des éléments d'enfilement (8, 9, 9a) entraînés par un moteur d'enfilement (6) par l'intermédiaire d'un disque à came et est mise autour d'un tambour des têtes (10) rotatif, la tension de la bande étant explorée en mode normal avant par un levier palpeur de tension de la bande (11) auquel un collier de frein (12) qui agit sur le plateau de déroulement est relié, et l'appareil présentant en outre un accouplement à glissement qui agit sur le plateau d'enroulement (3, 4) qui est respectivement entraîné, accouplement par lequel un préréglage de la tension de la bande est réalisé dans les différents modes, **caractérisé en ce** que, lors du renversement de la marche pour le mode recherche arrière, le levier palpeur de tension de la bande (11) est bloqué dans la dernière position qu'il a prise par un levier de blocage (13) qui peut être commandé de telle manière que, par l'augmentation de la tension de la bande lorsque le mode marche arrière démarre, le blocage est supprimé et le levier palpeur de tension de la bande (11) est tiré dans une position dans laquelle le collier de frein (12) est desserré et la poursuite de la commande de la tension de la bande est effectuée par l'effet de l'accouplement à glissement.

2. Procédé selon la revendication 1, **caractérisé en ce** que l'accouplement à glissement, qui agit sur le plateau d'enroulement (3, 4) qui est respectivement entraîné, est intégré à un engrenage (14), l'effet de l'accouplement à glissement étant réglable au moyen d'un convertisseur électromécanique (6).

3. Procédé selon la revendication 2, **caractérisé en ce** que l'effet de l'accouplement à glissement peut être commandé par des signaux au convertisseur électromécanique (6) qui sont donnés par un circuit à capteur (15) qui détecte la position du levier palpeur de tension de la bande (11) et qui, à partir de leur position respective dans un circuit d'évaluation (21), génère les signaux de commande pour le rajustage du convertisseur électromécanique (6).

4. Procédé selon la revendication 2, **caractérisé en ce** que l'effet de l'accouplement à glissement peut être commandé par des signaux au convertisseur électromécanique (6) qui sont donnés par un microprocesseur (22) par lequel les diamètres des enroulements de bande (25, 26) sont calculés et par lequel, à partir du rapport des deux diamètres des enroulements de bande l'un par rapport à l'autre, les signaux de commande sont générés pour le rajustage du convertisseur électromécanique (6).

5. Procédé selon l'une des revendications 2 à 4, **caractérisé en ce** que le convertisseur électromécanique (6) est le moteur d'enfilement (6) qui est relié à l'accouplement par un dispositif de levier de commande.

6. Procédé selon la revendication 1, **caractérisé en ce** que le levier (13) pour le blocage du levier palpeur de tension de la bande (11) est commandé par le moteur d'enfilement (6) par l'intermédiaire du disque à came (7).

7. Procédé selon la revendication 1, **caractérisé en ce** qu'un atténuateur élastique, qui atténue les oscillations de réglage du levier palpeur de tension de la bande (11), est efficace entre le levier (13) et le levier palpeur de tension de la bande (11).

8. Procédé selon la revendication 3, **caractérisé en ce** qu'une barrière photoélectrique, qui sert également à la détection de mode du mécanisme d'entraînement de la bande et qui n'est activée ni en mode normal de lecture, ni en recherche arrière, est utilisée comme capteur (15).
